# DEMANDE DE BREVET EUROPEEN

(11) **EP 1 642 877 A2**
(43) Date de publication de la demande: **05.04.2006**
(21) Numéro de dépôt: 05291881.0
(22) Date de dépôt: 12.09.2005
(51) Int. Cl.: C04B 38/02

(54) **Matériau de cimentation d'un puits**

(30) Priorité: 29.09.2004 FR 0410330
(71) Demandeur: Institut Français du Pétrole, 92852 Rueil Malmaison Cédex (FR)
(72) Inventeur: Lecolier, Eric, 92370 Chaville (FR); Rivereau, Alain, 92500 Rueil Malmaison (FR)

(57) **Abrégé**

La présente invention concerne une formulation d'un matériau de ciment-mousse à hautes performances, comportant :
- au moins un liant hydraulique,
- des microparticules de granulométrie comprise entre 0,1 et 30 µm, dont la teneur est comprise entre 15 % et 50 % en masse par rapport à la masse de liant hydraulique,
- des particules minérales de granulométrie comprise entre 1 et 500 µm dont la teneur est comprise entre 10 % et 35 % en masse par rapport à la masse du liant hydraulique, la teneur des particules étant inférieure à la teneur des microparticules,
- un agent polymère hydrosoluble de fluidification dont la teneur est comprise entre 0,1 % et 8 % en masse par rapport à la masse de liant hydraulique,
- de l'eau dont la teneur est au plus égale à 40 % en masse par rapport à la masse de liant hydraulique,
- un agent moussant dont la teneur est comprise entre 0,1 % et 10 % en masse par rapport à la masse du liant hydraulique.

## Description

La présente invention concerne un coulis de cimentation d'un puits, notamment d'un puits d'exploration ou d'exploitation de gisements souterrains, tels les gisements d'hydrocarbures ou géothermiques. L'invention propose de nouvelles formulations de matériaux de cimentation présentant simultanément de faibles masses volumiques, des propriétés mécaniques élevées et une faible perméabilité.

Les cimentations de puits d'exploitation d'hydrocarbures sont des opérations complexes dont les buts sont multiples : assurer mécaniquement les colonnes de tubes dans la formation géologique, isoler une couche productrice des couches adjacentes, protéger les colonnes contre la corrosion due aux fluides contenus dans les couches traversées. Les gaines de ciment doivent donc présenter de bonnes résistances mécaniques et une faible perméabilité aux fluides et gaz contenus dans les formations forées.

Dans certaines conditions d'exploitation des gisements d'hydrocarbures ou géothermiques, il est primordial de pouvoir disposer de matériaux de cimentation ayant à la fois de faibles masses volumiques et d'excellentes propriétés physiques (résistances mécaniques et perméabilité). Or, ces deux conditions sont difficiles à associer avec les matériaux de cimentation conventionnels. Il est connu depuis les travaux de Féret que la résistance mécanique varie de façon inverse à la porosité. Féret a notamment montré que la résistance à la compression Rc s'exprimait de la façon suivante : 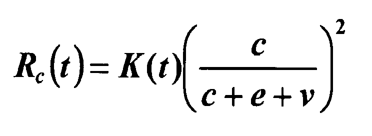 où c, e et v sont les volumes de ciment, d'eau et d'air respectivement, et K(t) une fonction cinétique.

Pour alléger les coulis de cimentation, il est courant soit d'augmenter la quantité d'eau, soit la quantité d'air (en utilisant des billes creuses ou en entraînant volontairement beaucoup d'air pour former une mousse de ciment). D'après la formule ci-dessus, ces deux voies conduisent à une dégradation de la résistance mécanique, et dans le même temps à une forte augmentation de la perméabilité du matériau durci.

Lorsque les formations forées sont fragiles et non consolidées, il est impossible de réaliser les opérations avec un coulis de ciment dense sous peine de dépasser la pression de fracturation des terrains. Ce problème est notamment rencontré pour les cimentations des cuvelages des puits forés en offshore ou des puits forés dans des champs matures.

Pour cimenter des puits traversant des formations fragiles, c'est-à-dire avec un faible gradient de fracturation, il est connu d'alléger de façon significative le coulis en introduisant du gaz. Ce gaz peut être introduit soit grâce à des microsphères en verre ou céramique creuses. Cette technique est notamment décrite dans les documents US 3,804,058 et US 4,252,193. Le gaz peut également être introduit dans le coulis en créant une mousse grâce à des agents moussants ajoutés à ce coulis. Cette technique est notamment décrite dans les documents US 5,806,594 et US 5,484,019.

Les ciments allégés par des billes creuses présentent des inconvénients. L'un des inconvénients est la destruction des billes sous l'effet de la pression hydrostatique. Cette destruction se traduit par une augmentation de la densité au cours du pompage du coulis : la pression de fracturation peut donc être atteinte. Un autre inconvénient des billes de verre creuses provient de la destruction, dans le ciment durci, des parois des billes en raison des réactions pouzzolaniques. Cette destruction se traduit par une augmentation de la perméabilité de la matrice de ciment.

Les formulations courantes d'un coulis, couramment nommé laitier dans la profession pétrolière, de ciment-mousse pour cimentation de puits comportent une quantité d'eau comprise entre 40 et 60 % du poids de ciment. Cette quantité d'eau élevée nécessaire pour abaisser les masses volumiques du coulis de ciment et pour optimiser la rhéologie génère une porosité importante ce qui se traduit par des propriétés médiocres de la gaine de ciment en termes de perméabilité, de résistances mécaniques, de fissuration et de durabilité.

Le problème se pose donc de formuler une mousse de liant hydraulique pompable (c'est-à-dire présentant une gamme de viscosités compatibles avec celles requises pour la mise en place du coulis dans l'espace annulaire), pour la cimentation des puits pétroliers ou autres, avec de meilleures résistances mécaniques et une plus faible perméabilité. Pour cela, la présente invention décrit la façon de formuler un matériau de cimentation de faible masse volumique en introduisant du gaz sous forme de bulles qui seront séparées par une matrice de ciment très compacte. Dans ce cas, bien que le matériau obtenu soit très poreux, la perméabilité de ce matériau reste très faible car l'invention décrite permet d'obtenir un ciment-mousse dans lequel les bulles ne sont pas interconnectées.

Il existe des formulations de ciment avec des propriétés mécaniques très supérieures, comme celle décrite par exemple dans le document EP 950 034. Ces formulations sont basées sur la maximisation de la fraction volumique de l'empilement par optimisation de la granulométrie des particules minérales. En effet, il est connu de longue date dans la profession (voir ci-dessus la formule de Féret) que les propriétés des matériaux cimentaires sont améliorées en augmentant la compacité du mélange (ou, ce qui revient au même en diminuant la porosité). Ces matériaux peuvent avoir des résistances à la compression supérieures à 100 MPa et des perméabilités au gaz de l'ordre du nanoDarcy. Il est connu que la viscosité des suspensions augmente exponentiellement avec la fraction volumique en particules solides: l'augmentation importante de la viscosité des coulis de ciment est dramatique d'un point de vue opérationnel car, dans ce cas, le matériau ne peut plus être mis en place par pompage. Or, dans l'invention décrite dans le document EP 950 034, l'optimisation de l'empilement granulométrique du mélange de poudres minérales réalisé en choisissant correctement à la fois les tailles des particules minérales et leur concentration, permet d'obtenir des coulis beaucoup plus fluides que les coulis de ciment conventionnels. Contrairement aux ciments classiques, les matériaux de cimentation à hautes performances décrits dans le document EP 950 034 peuvent avoir un seuil d'écoulement nul. Toutefois, les masses volumiques de ces ciments à hautes performances, tels que ceux décrits dans le document EP 950 034, sont supérieures à 1,9 g.cm⁻³, et ne conviennent donc pas aux cimentations des zones fragiles et non consolidées telles qu'on peut les rencontrer en forage en mer profonde ou pour la cimentation de puits dans des gisements déplétés. Récemment, des formulations de faibles masses volumiques typiquement comprises entre 1,2 et 1,6 g.cm⁻³ ont été mises au point pour la cimentation de puits forés dans des couches géologiques non consolidées. Ces matériaux de cimentation sont des matériaux à hautes performances dans lesquels des microsphères creuses ont été ajoutées. Ces matériaux présentent donc les mêmes inconvénients que les ciments classiques contenant des microsphères creuses : écrasement des microsphères pendant le pompage dans le puits, réaction pouzzolanique entre la portlandite et la silice contenue dans les parois des microsphères. De plus, il est impossible de faire varier la masse volumique du ciment en cours de cimentation.

Ainsi, la présente invention propose une formulation de matériau de cimentation présentant simultanément des faibles masses volumiques et d'excellentes propriétés physiques, notamment de résistance à la compression et de perméabilité. Cette concomitance de faibles masses volumiques et de propriétés physiques supérieures à l'état de l'art actuel est réalisée en faisant mousser des ciments dont la fraction volumique d'empilement est maximisée par ajustement des proportions des différentes classes granulométriques qui composent le matériau.

De manière générale, la présente invention concerne un matériau de cimentation comportant :
- au moins un liant hydraulique du groupe constitué par les ciments Portland classe G, les ciments Portland classe H, les ciments alumineux dont la teneur en alumine est au moins supérieure à 30 % en masse, et les ciments sulfoalumineux,
- des microparticules du groupe constitué par les particules de microsilice et des particules de silico-aluminates, de granulométrie comprise entre 0,1 et 30 µm, dont la teneur est comprise entre 15 % et 50 % en masse par rapport à la masse de liant hydraulique,
- des particules minérales de granulométrie comprise entre 1 et 500 µm dont la teneur est comprise entre 10 % et 35 % en masse par rapport à la masse du liant hydraulique, la teneur des particules étant inférieure à la teneur des microparticules,
- un agent polymère hydrosoluble de fluidification dont la teneur est comprise entre 0,1 % et 8 % en masse par rapport à la masse de liant hydraulique,
- de l'eau dont la teneur est au plus égale à 40 % en masse par rapport à la masse de liant hydraulique,
- un agent moussant dont la teneur est comprise entre 0,1 % et 10 % en masse par rapport à la masse du liant hydraulique.

Selon l'invention, le matériau peut comporter, en outre, un additif stabilisant de la mousse dont la teneur est comprise entre 0,1 % et 2 % en masse par rapport à la masse du liant hydraulique, l'additif étant un polymère associatif hydrosoluble comportant des motifs hydrophobes.

L'agent moussant peut être un composé tensio-actif en proportion comprise entre 0,1 % et 3 % en masse par rapport à la masse du liant hydraulique. Le composé tensio-actif peut être choisi parmi les produits suivants : les sels d'acide abiétique, les alkyl-aryl sulfonates de sodium, les phénol-éthoxylates et les perfluoroalkyl betaïne.

L'agent moussant peut également être un polymère, nommé « polymère associatif », hydrosoluble comportant des chaînes hydrophobes, le polymère étant en proportion comprise entre 0,1 % et 10 % en masse par rapport à la masse du liant hydraulique. Le polymère associatif peut être un polymère à motifs hydrophiles Hy et à motifs Hb hydrophobes contenant des groupements alkyles, aryles, alkyl-aryle C1 à C30. Le polymère associatif peut avoir une masse moléculaire comprise entre 10⁴ et 5×10⁶ daltons et un taux de motifs hydrophobes Hb compris entre 0,5 et 60 %.

Selon l'invention, la masse de microparticules peut être comprise entre 15 % et 30 % par rapport à la masse de liant hydraulique.

La teneur en eau peut être comprise entre 20 % et 35 % en masse par rapport à la masse du liant hydraulique.

Selon l'invention, l'agent polymère hydrosoluble de fluidification peut être choisi dans le groupe constitué par : un polynaphtalène sulfonate, un polycarboxylate et un polycarboxylate de polyoxyéthylène

Le matériau de cimentation selon l'invention peut comporter, en outre, un agent retardateur pour contrôler le temps de prise du coulis.

Le matériau de cimentation selon l'invention peut comporter, en outre, un agent accélérateur pour contrôler le temps de prise du coulis.

Le matériau de cimentation selon l'invention peut être utilisé pour cimenter un puits pétrolier.

Dans la présente invention, le matériau cimentaire des parois séparant les bulles de mousse présente donc une compacité supérieure à celle correspondant aux matériaux cimentaires habituellement mis en oeuvre dans la profession. La porosité des pâtes de ciment de ces nouveaux matériaux a été mesurée par porosimétrie au mercure et est inférieure à 12% alors que la porosité des pâtes de ciment des ciments-mousse conventionnels est supérieure à 25%.

Les parois entre les bulles de la mousse de ciment décrite dans l'invention étant moins poreuses (ou ce qui est équivalant plus compactes), il en résulte que la perméabilité et les résistances mécaniques sont supérieures à celles des ciments-mousse obtenus à partir d'un coulis de ciment classique dont la quantité en eau est supérieure à 40% de poids de ciment.

Les ciments à hautes performances étant très fluides, il est difficile d'obtenir à partir de ces coulis une mousse stable, c'est-à-dire dont les bulles ne coalescent pas. Si les bulles coalescent avant la prise du ciment, le matériau durci sera très perméable et peu résistant mécaniquement. L'ajustement des proportions des différents granulats qui composent le coulis de ciment selon l'invention permet d'obtenir une mousse de ciment stable, malgré la haute fluidité du matériau de cimentation. L'invention décrite dans ce brevet permet d'obtenir des mousses de ciment à hautes performances stables et donc in fine un matériau durci de très faible perméabilité et donc de meilleure durabilité.

De plus, le temps de prise des formulations mises au point dans la présente invention est inférieur au temps de prise d'un ciment-mousse conventionnel. En effet, il est connu par l'homme de l'art que le temps de prise diminue quand le rapport eau/ciment décroît. Donc les formulations développées dans le cadre de la présente invention pourront être préférées aux ciments-mousse classiques lorsque les températures des puits seront basses.

Ainsi, les formulations de ciment-mousse de la présente invention permettent de réaliser toutes les opérations de cimentations requises dans le cas de puits forés dans des terrains de faible cohésion. Les formulations de la présente invention peuvent également être mises en oeuvre pour cimenter des zones caverneuses, faillées et plus généralement dans des zones où surviennent des pertes de fluides lors du forage.

D'autres caractéristiques et avantages de l'invention seront mieux compris et apparaîtront clairement à la lecture de la description faite ci-après en se référant aux dessins parmi lesquels :
- les figures 1 et 2 sont des photographies d'un ciment-mousse présentant un problème de stabilité de la mousse,
- la figure 3 est une photographie d'un ciment-mousse stable obtenu selon l'invention.

Selon l'invention, on a optimisé la faible masse volumique et d'excellentes propriétés physiques (résistance à la compression et perméabilité) des formulations de matériaux de cimentation en combinant les composants suivants:
- un liant hydraulique du groupe constitué par les ciments Portland et les autres liants hydrauliques, par exemple de type ciment alumineux dont la teneur en alumine est supérieure à 30%, ou ciment sulfoalumineux ou du plâtre,
- une microsilice (encore nommée fumée de silice) de granulométrie comprise dans la gamme 0,1 µm et 30 µm (surface spécifique BET peut être comprise entre 10 et 30 m²/g, de préférence 18 m²/g), dont le pourcentage dans la composition selon l'invention est compris entre 15 et 50% en masse par rapport à la masse du liant hydraulique. Dans l'invention, la microsilice peut être remplacée par des cendres volantes (particules silico-alumineuses, sulfocalciques ou silico-calciques).
- un ajout minéral dont la granulométrie est comprise entre 1 µm et 500 µm (ce qui correspond à un D50 compris entre 35 µm et 210 µm ou à une surface spécifique comprise entre 0,03 m²/g et 0,65 m²/g). La quantité de l'ajout minéral est comprise entre 10 et 35% en masse par rapport à la masse du liant hydraulique. La proportion d'ajout minéral reste inférieure à la proportion de microsilice de façon à respecter l'optimisation de la compacité de l'empilement des différents granulats.
- un agent superplastifiant encore appelé fluidifiant hydrosoluble en proportion comprise entre 0,1% et 8% en masse par rapport à la masse du liant hydraulique. L'agent de fluidification peut être soit un polynaphtalène sulfonate, soit un polycarboxylate, soit un polycarboxylate de polyoxyéthylène.
- de l'eau en quantité au plus égale à 40% en masse par rapport à la masse du liant hydraulique. Elle est plus particulièrement comprise entre 15 et 40%, et préférentiellement entre 20 et 35%.
- un agent moussant dont la concentration est comprise entre 0,1% et 10% en masse par rapport à la masse de liant hydraulique. Cet agent moussant peut être un tensio-actif anionique (comme le dodécyl de sulfate de sodium), ou un tensio-actif non ionique, ou un polymère hydrosoluble comportant des maillons hydrophobes (dits polymères associatifs), ou un produit entraîneur d'air, ou un mélange de ces molécules, et
- éventuellement, un additif stabilisant la mousse. Cet additif peut être un polymère hydrosoluble modifié hydrophobe.

Les ciments portland peuvent être du Black Label, du HTS ou du CEMOIL fabriqués respectivement par les sociétés Dyckerhoff, Lafarge et CCB. Les ciments alumineux peuvent être les ciments Secar 51 ou Ternal fabriqués par la société Lafarge Aluminates.

Lorsque l'agent moussant est un composé tensio-actif, il peut être en proportion comprise entre 0,1 % et 3 % en masse par rapport à la masse du liant hydraulique. Les tensio-actifs utilisés dans la formulation du coulis de ciment selon l'invention peuvent être des sulfates d'alcool gras encore nommés alkylsulfates de formule générale R―O―SO₃X où X peut être un sel de sodium, d'ammonium ou d'alkylolamines et R est une chaîne hydrocarbonée comportant un nombre d'atomes de carbone compris entre 8 et 20. Une autre classe de tensio-actif peut être celle correspondant aux alkyléthersulfates qui comprennent entre 1 et 10 groupes d'oxyde d'éthylène. La formule générale de ces produits s'écrit R―O―(CH₂CH₂O)ₙ―SO₃X où n est compris entre 1 et 10 et R est une chaîne hydrocarbonée comportant un nombre d'atomes de carbone compris entre 8 et 20. Les tensio-actifs de formule générale R―(C₆H₆)―O― (CH₂-CH₂-O)n―SO₃X où n est compris entre 3 et 15 et R est une chaîne hydrocarbonée comportant un nombre d'atomes de carbone compris entre 8 et 20 peuvent également être utilisés pour obtenir une mousse de ciment. Les phénol-éthoxylates de formule générale R-(C₆H₆)-O-(CH₂O)ₙ-HNa où n est compris entre 3 et 15 et R est une chaîne hydrocarbonée comprenant entre 8 et 18 atomes de carbone, peuvent être utilisés en tant qu'agent moussant. De même, on peut obtenir une mousse de ciment en utilisant les tensio-actifs alkyl-aryl sulfonates de sodium, de formule générale R-(C₆H₆)-SO₃Na où R est une chaîne hydrocarbonée comprenant entre 8 et 18 atomes de carbone. Les tensio-actifs non ioniques de formule générale R―(COO)―(CH₂CH₂)―(CH₂₋CH₂-O)ₙ―OH où n est compris entre 1 et 24, ainsi que les tensio-actifs non ioniques dont la partie hydrophobe est une chaîne hydrocarbonée de formule CH₃(CH₂)ₘ et la partie hydrophile est une chaîne oxyéthylénée de formule (CH₂CH₂O)ₙ où m est compris entre 8 et 20 et n entre 2 et 24 peuvent également être utilisés dans l'invention. Les groupes hydrophiles peuvent également être des sucres ou des dérivés du glycérol. Ces types de tensio-actifs, notamment les alkylpolyglucosides, présentent une efficacité supérieure dans la formation de mousses et leur utilisation est avantageuse dans des milieux fortement salés comme les coulis de ciment. De plus, ces tensio-actifs présentent une très bonne biodégradabilité. Des tensio-actifs cationiques peuvent être utilisés notamment des sels d'alkylamines de formule générale

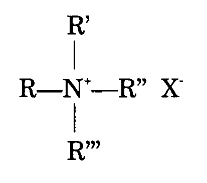

Où R est une chaîne hydrocarbonée constituée de 8 à 20 atomes de carbone, R', R" et R"' correspondent à des atomes d'hydrogène ou des groupes méthyle, éthyle, benzyle ou oxyéthylénés et X un anion.

L'agent moussant peut également être du sel d'acide abiétique de formule générale C₂₀H₃₀O₂-X , où X est un sel de sodium, de potassium.

Avantageusement, on peut utiliser les tensio-actifs zvitterioniques, par exemple les alkyl amidobetaïne de formule générale CₙH₂ₙ₊₁CONH(CH₂)₃N⁺(CH₃)₂CH₂COO⁻ où n est compris entre 10 et 18. On peut également utiliser la forme fluorée de ce tensio-actif. La perfluoroalkyl betaine donne des mousses de bonne qualité et stable. La perfluorobetaine présente en plus l'avantage d'être chimiquement stable à hautes températures.

Un mélange de ces tensio-actifs peut être avantageusement utilisé. Ce mélange peut comporter également des cotensio-actifs. Ces cotensio-actifs peuvent être des alcools gras.

Lorsque l'agent moussant est un polymère associatif, il peut être en proportion comprise entre 0,1 % et 10 % en masse par rapport à la masse du liant hydraulique.

Les polymères associatifs utilisés dans la composition du coulis de ciment selon l'invention peuvent être un polymère à motifs hydrophiles (Hy) et hydrophobes (Hb) en solution aqueuse, les motifs hydrophobes (Hb) contenant des groupements alkyles, aryles, alkyl-aryle C1 à C30, le polymère ayant la structure suivante : ―(Hb)―(Hy)― avec une répartition statistique avec :
- Hy est de la forme : 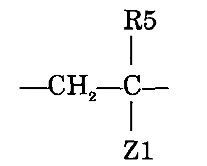
où R5 est H ou CH3, et Z1 est COOH ou CONH₂ ou CONHR1SO³⁻ ou CONHR"1, R"1 est CH₃ ;
ou de la forme : 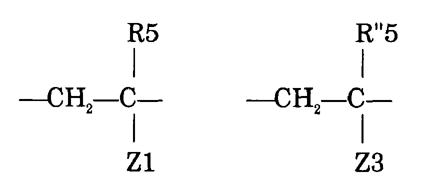 où R5 est H ou CH₃, et Z1 est CONH₂ ou CONHR"1, R"1 est CH₃ et où R"5 est H ou CH₃, et Z3 est COOH ou CONHR1SO³⁻ où R1 est C₃H₈, ou C₆H₅ ;
Hb est de la forme 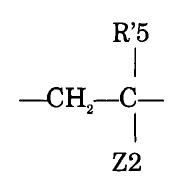 où R'5 est H ou CH₃ et Z2 est COOR7, COOR'1, CONR1R'1 ou CONR1R7, R7 étant un tensioactif non ionique constitué d'une chaîne polyoxyéthylènique d'alkyle, R1 est H ou un radical alkyle, aryle ou alkyl-aryle de C1-C30, et R'1 est un radical alkyle, aryle ou alkyl-aryle de C1-C30.

En particulier, le polymère peut avoir une masse moléculaire comprise entre 10⁴ et 5x10⁶ daltons, et plus précisément entre 10⁴ et 1,5x10⁶ daltons, et un taux de motifs hydrophobes Hb compris entre 0,5 et 60%.

Selon la présente invention, le polymère associatif peut également être un dérivé du galactomanane modifié hydrophyliquement et hydrophobiquement tel que décrit dans le brevet US-A-4,960,876. Ce polymère associatif est produit par la société LAMBERTI et commercialisé sous les références HPG19, HPG21, HM21, HM22. La masse moléculaire du galactomanane modifié peut être inférieure à 5x10⁶ daltons, préférentiellement inférieure à 2×10⁶ daltons. Le groupement hydrophobe peut être un radical alkyl linéaire ou ramifié, saturé ou avec insaturation éthylénique comprenant entre 10 et 32 atomes de carbone, préférentiellement entre 12 et 30. L'addition au coulis de ciment d'une quantité de dérivé de galactomanane modifié hydrophyliquement et hydrophobiquement ou d'une quantité d'un mélange de polymères hydrosolubles modifiés hydrophobiquement tels que décrits précédemment et de dérivés de galactomanane modifié hydrophyliquement et hydrophobiquement permet d'obtenir des mousses de ciment de masses volumiques différentes et inférieures à la masse volumique initiale du coulis de ciment.

Le polymère associatif peut être choisi dans le groupe constitué par :
- HMPAM1 : où R5 est H et Z1 est CONH₂, R'5=CH₃, Z2 est COOR'1 avec R'1=C₉H₁₉,
- HMPAM2: où R5 est H et Z1 est CONH₂, R'5=H, Z2 est CONR'1R'1 avec R'1=C₆H_{13'}
- HMPAM3: où R5 est H et Z1 est CONH2, R"5=H, Z3 est COOH ou CONHR1SO₃, où R1 est C₃H₈ (AMPS), R'5=H, Z2 est CONR'1R'1 avec R'1=C₆H₁₃,
- S1: où R5 est H et Z1 est CONH₂, R'5=H et Z2 est C₆H₄SO₃H,
- HB1 : où R5 est H, Z1 est COOH, R'5 est H et Z2 est COOR'1 avec R'1=C₄H₉.

En particulier, le polymère dénommé HMPAM1, ou HMPAM2, ou HMPAM3, peut avoir une masse moléculaire comprise entre 5x10⁵ et 2x10⁶ daltons et un taux d'hydrophobe (Hb) compris entre 0,5 et 3%.

Le polymère S1, copolymère acrylamide (Hy)/styrène sulfonate (Hb) ramifié ou non, selon la description ci-dessus peut avoir un rapport molaire d'environ 50/50 et une masse molaire comprise entre 5x10⁵ et 5x10⁶ daltons. Dans le cas où il est ramifié, il sera dénommé S2. Le ramifiant utilisé dans ce cas peut être le N,N'méthylène bis acrylamide MBA.

Le polymère HB1, copolymère acrylate (Hy)/butyl acrylate (Hb), avec R5 est H, Z1 est COOH, R'5 est H et Z2 est COOR'1 avec R'1 en C4, peut comprendre de 50% à 80% de motifs acrylates, et avoir une masse moléculaire comprise entre 10⁴ et 5x10⁶ daltons, de préférence entre 10⁴ et 5x10⁴.

Pour obtenir une mousse de ciment la plus stable possible, on peut choisir des proportions des différents composants du coulis de ciment dans la gamme :
- de 20 g à 50 g de microsilice ou cendres volantes pour 100 g de liant hydraulique, la microsilice ayant de préférence une surface spécifique comprise entre 10 et 30 m²/g,
- de 10 g à 35 g d'ajout minéral pour 100 g de liant hydraulique, l'ajout minéral ayant de préférence un D50 compris entre 35 et 210 µm, par exemple compris entre 35 et 90 µm ou entre 140 et 210 µm.

Le coulis de ciment comprenant les différentes granulométries est très fluide, en l'occurrence il peut y avoir absence de seuil d'écoulement, c'est-à-dire que le ciment s'écoule sous le seul effet de la force de gravité. Cette fluidité peut être la cause d'un manque de stabilité de la mousse de ciment. On peut ajouter un polymère associatif pour améliorer la stabilité de la mousse, en proportion comprise entre 0,1 % et 2 %, de préférence entre 0,1 % et 1 %. Ce polymère associatif permet d'augmenter la viscosité du coulis, ce qui a pour effet de limiter la coalescence des bulles de gaz.

Lorsque l'agent moussant est un polymère associatif, la formulation de ciment ne nécessite pas forcément d'additif stabilisant de la mousse. En effet, certains polymères associatifs, par exemple le polymère HB1, permettent simultanément de faire mousser le coulis de ciment et de stabiliser la mousse.

En outre, la formulation du matériau de cimentation selon l'invention peut comporter un agent retardateur qui permet de retarder le temps de prise du coulis de ciment.

Les agents retardateurs peuvent être des produits organiques, ou des matières minérales solubles dans l'eau.

Parmi les produits organiques, on distingue les molécules suivantes :
- les lignosulfonates (de calcium, de sodium) dont les teneurs en sucres sont inférieures à 20%,
- les acides et sels (sodium, potassium, calcium) d'acides hydroxycarboxyliques,
- les acides oxalique et gluconique qui sont efficaces à très faibles dosages,
- le gluconate de sodium de formule CH₂OH(CHOH)₄COONa est très actif pour retarder des matériaux contenant des liants hydrauliques,
- le gluconate de calcium,
- les hydrates de carbone de formule générale Cₙ(H₂O)ₙ ; parmi ces molécules, le saccharose de formule C₁₂H₂O₁₁ est très efficace ; on peut également utiliser les glucoses (C₆H₁₂O₆), l'amidon (C₆H₁₀O₅)ₙ ainsi que la cellulose,
- le sirop de maïs.

Ces produits organiques peuvent être utilisés à des dosages compris entre 0,1 % et 5 % en masse d'extrait sec par rapport à la masse de liant hydraulique.

Parmi les agents retardateurs à base de sels minéraux, on peut utiliser les produits suivants :
- les composés du bore utilisés à très faibles dosages peuvent être utilisés pour retarder les matériaux cimentaires ; on peut priviligier l'acide borique (BO₃H₃), le borax (Na₂B₄O₇10H₂O), le métaborate de sodium Na₂B₂O₄, le tétraborate de sodium (Na₂B₄O₇),
- le sulfate d'étain (S₂SO₄)
- l'acétate de plomb (Pb(C₂H₃O₂)₂)
- le monophosphate de calcium (Ca(H₂PO₄)₂)

Ces agents retardateurs à base de sels minéraux peuvent être utilisés à des dosages compris entre 0,1 % et 2 % en masse par rapport à la masse de liant hydraulique.

En outre, la formulation du matériau de cimentation selon l'invention peut comporter un agent accélérateur qui permet d'accélérer le temps de prise du coulis de ciment. Cet agent accélérateur peut être utilisé pour cimenter des zones à faible température comprise entre -4°C et 10°C. Par exemple, les zones proches du fond marin pour les forages en mer profonde peuvent être à des températures d'environ 4°C.

Les agents accélérateurs peuvent être choisis parmi les produits suivants :
- le chlorure de calcium (CaCl₂),
- le nitrite de calcium (Ca(NO₂)₂),
- le formiate de calcium (Ca(HCO₂)₂.

Ces produits peuvent être utilisés à des concentrations comprises entre 0,5 et 5% en masse par rapport à la masse de liant hydraulique. Pour des températures inférieures à 15°C, le chlorure de calcium ne doit pas être utilisé à des concentrations supérieures à 2,5% par rapport à la masse de ciment. Au-delà de cette concentration, il se comporte comme un retardateur de prise à faibles températures.

On peut également utiliser des agents accélérateurs non chlorés disponibles sur le marché.

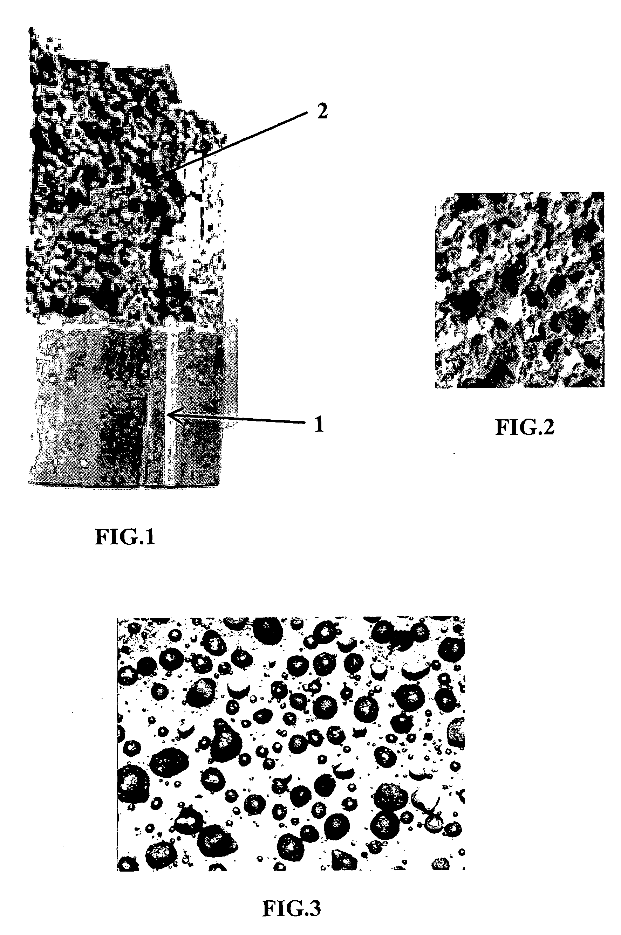

En fonction de la teneur des différents constituants mentionnés ci-dessus, le ciment-mousse obtenu peut ne pas être stable comme le montre les figures 1 et 2. En effet, en fonction de la proportion des différents constituants, le coulis peut avoir une ségrégation.

Dans ce type de formulation, il y a eu un drainage très important avant la prise du ciment. Sur la figure 1, il y a eu formation d'un système biphasique avec un coulis de ciment dans la partie inférieure 1 et une mousse très aérée et très connectée dans la partie supérieure 2. La figure 2 représente un agrandissement de la partie 2 de la figure 1. Une telle formulation de ciment-mousse n'est pas satisfaisante pour la cimentation des puits. Selon l'invention, on a optimisé la proportion des différents constituants pour obtenir un ciment-mousse stable et homogène avec des propriétés améliorées. Cette obtention de ciments-mousses stables aux propriétés améliorées passe notamment par l'optimisation de l'empilement granulaire et de la quantité des agents moussants.

La figure 3 montre la structure de ciment-mousse obtenue suivant la présente invention : on distingue très nettement que les bulles ne sont pas coalescées. Les bulles sont séparées et indépendantes.

Les formulations de coulis de ciment présentées ci-après permettent d'illustrer l'invention.

L'influence de la concentration en agent moussant a été évaluée pour un coulis comportant : un rapport eau/ciment E/C = 0,27 ; microsilice = 24% ; ajout minéral = 20%.

| | | | |
|---|---|---|---|
| Concentration en tensio-actif anionique (g/100g de ciment) | 0,25 | 0,40 | 0,75 |
| Masse volumique (g/cm³) | 1,70 | 1,32 | 1,24 |
| Rc (MPa) | 32 | 17 | 12,5 |

L'influence de la concentration en agent moussant a été évaluée pour un coulis comportant : un rapport eau/ciment E/C = 0,27 ; microsilice = 50% ; ajout minéral = 20%.

| | | | | |
|---|---|---|---|---|
| Concentration en tensio-actif anionique (g/100g de ciment) | 0 | 0,25 | 0,5 | 0,75 |
| Masse volumique (g/cm³) | 2,25 | 2,03 | 1,74 | 1,63 |
| Rc (MPa) | 123 | 74 | 40 | 39 |

L'influence de la teneur en microsilice moussant a été évaluée pour un coulis comportant : un rapport eau/ciment E/C = 0,27 ; ajout minéral = 20%, concentration en agent moussant (tensio-actif) = 0,75%.

| | | | |
|---|---|---|---|
| Teneur en microsilice (g/100 g de ciment) | 24 | 30 | 50 |
| Masse volumique (g/cm³) | 1,24 | 1,42 | 1,63 |
| Rc (MPa) | 12,5 | 19 | 39 |

En faisant varier la quantité d'agent moussant entre 0 et 0,75 %, on observe qu'il est possible d'abaisser la densité du matériau de 2,25 à 1,24 g/cm³.

Lorsque l'on ajoute une quantité identique d'agent moussant (par exemple 0,75 %) on remarque que l'on obtient de plus faibles masses volumiques lorsque la quantité de microsilice est peu importante. Pour obtenir les ciments-mousse de plus faibles masses volumiques, on choisit les formulations comportant des quantités de microsilice comprises entre 15 % et 30 % en masse par rapport à la masse de liant hydraulique.

Enfin, on peut noter que les formulations contenant 50 % de microsilice présentent de très bonnes résistances à la rupture en compression. Ainsi, pour une formulation de densité 1,63 g/cm³ contenant 50 % de microsilice et fabriquée selon l'invention, la résistance à la compression est de 39 MPa, ce qui est supérieur à la valeur mesurée pour une pâte de ciment non moussée de densité 1,9 g/cm³. Les matériaux de cimentation obtenus selon l'invention permettent donc d'atteindre des masses volumiques faibles sans toutefois perdre en résistance mécanique.

Deux coulis de ciments à densité équivalente sont comparés : un ciment-mousse classique et un ciment-mousse à hautes performances selon l'invention.

### Formulation du ciment-mousse classique :

Ciment Portland classe G : 100
Eau/Ciment : 44%
Sodium Dodécyl Sulfate/Ciment : 4,4×10⁻² %

Formulation du ciment-mousse à hautes performances selon l'invention :
Ciment Portland classe G : 100
Eau/Ciment : 27%
Microsilice : 24%
Ajout minéral : 20%
Sodium Dodécyl Sulfate/Ciment : 0,625 %

Le tableau suivant permet de comparer les propriétés des deux matériaux :

| Grandeurs Mesurées | Ciment-mousse classique | ciment-mousse hautes performances |
|---|---|---|
| Masse volumique (g cm⁻³) | 1,32 | 1,30 |
| Résistance à la compression (MPa) | 6,8 | 18,4 |
| Résistance à la flexion (MPa) | 2,7 | 3,9 |
| Module d'Young (GPa) | 4,302 | 7,394 |
| Perméabilité au gaz (m²) | 3,9×10⁻¹⁶ | 7,8×10⁻¹⁷ |

D'après les valeurs obtenues sur les deux matériaux, il est clairement établi que le ciment-mousse hautes performances selon l'invention présente de meilleures propriétés qu'un ciment-mousse conventionnel d'un point de vue de la résistance mécanique et de la perméabilité.

Il est très intéressant de noter que la perméabilité obtenue sur le ciment-mousse hautes performances est équivalente à celle d'un ciment non allégé (de rapport eau/ciment de 0,44) classiquement utilisé pour la cimentation des cuvelages dans les puits pétroliers. En effet, la perméabilité d'un tel ciment est de 8×10⁻¹⁷ m². Donc bien que le matériau objet de la présente invention ait une porosité nettement supérieure (de l'ordre de 50%) à un ciment classique, sa perméabilité est équivalente ce qui constitue un avantage, notamment, en terme de durabilité.

## Revendications

1. Matériau de cimentation comportant :
- au moins un liant hydraulique du groupe constitué par les ciments Portland classe G, les ciments Portland classe H, les ciments alumineux dont la teneur en alumine est au moins supérieure à 30 % en masse, et les ciments sulfoalumineux,
- des microparticules du groupe constitué par les particules de microsilice et des particules de silico-aluminates, de granulométrie comprise entre 0,1 et 30 µm, dont la teneur est comprise entre 15 % et 50 % en masse par rapport à la masse de liant hydraulique,
- des particules minérales de granulométrie comprise entre 1 et 500 µm dont la teneur est comprise entre 10 % et 35 % en masse par rapport à la masse du liant hydraulique, la teneur des particules étant inférieure à la teneur des microparticules,
- un agent polymère hydrosoluble de fluidification dont la teneur est comprise entre 0,1 % et 8 % en masse par rapport à la masse de liant hydraulique,
- de l'eau dont la teneur est au plus égale à 40 % en masse par rapport à la masse de liant hydraulique,
- un agent moussant dont la teneur est comprise entre 0,1 % et 10 % en masse par rapport à la masse du liant hydraulique.

2. Matériau selon la revendication 1, comportant en outre un additif stabilisant de la mousse dont la teneur est comprise entre 0,1 % et 2 % en masse par rapport à la masse du liant hydraulique, l'additif étant un polymère associatif hydrosoluble comportant des motifs hydrophobes.

3. Matériau selon l'une des revendications 1 et 2, dans lequel l'agent moussant est un composé tensio-actif en proportion comprise entre 0,1 % et 3 % en masse par rapport à la masse du liant hydraulique.

4. Matériau selon la revendication 3, dans lequel le composé tensio-actif est choisi parmi les produits suivants : les sels d'acide abiétique, les alkyl-aryl sulfonates de sodium, les phénol-éthoxylates et les perfluoroalkyl betaïne.

5. Matériau selon l'une des revendications 1 à 4, dans lequel l'agent moussant est un polymère associatif hydrosoluble comportant des chaînes hydrophobes, le polymère étant en proportion comprise entre 0,1 % et 10 % en masse par rapport à la masse du liant hydraulique.

6. Matériau selon l'une des revendications précédentes, dans lequel le polymère associatif est un polymère à motifs hydrophiles Hy et à motifs Hb hydrophobes contenant des groupements alkyles, aryles, alkyl-aryle C1 à C30.

7. Matériau selon la revendication 6, dans lequel le polymère associatif a une masse moléculaire comprise entre 10⁴ et 5×10⁶ daltons et un taux de motifs hydrophobes Hb compris entre 0,5 et 60 %.

8. Matériau selon l'une des revendications précédentes, dans lequel, la masse de microparticules est comprise entre 15 % et 30 % par rapport à la masse de liant hydraulique.

9. Matériau selon l'une des revendications précédentes, dans lequel la teneur en eau est comprise entre 20 % et 35 % en masse par rapport à la masse du liant hydraulique.

10. Matériau selon l'une des revendications précédentes, dans lequel l'agent polymère hydrosoluble de fluidification est choisi dans le groupe constitué par : un polynaphtalène sulfonate, un polycarboxylate et un polycarboxylate de polyoxyéthylène

11. Matériau selon l'une des revendications précédentes, comportant en outre un agent retardateur pour contrôler le temps de prise du coulis.

12. Matériau selon l'une des revendications précédentes, comportant en outre un agent accélérateur pour contrôler le temps de prise du coulis.

13. Matériau selon l'une des revendications précédentes, utilisé pour cimenter un puits pétrolier.
